# EUROPÄISCHE PATENTANMELDUNG

(11) **EP 3 016 251 A1**
(43) Veröffentlichungstag der Anmeldung: **04.05.2016**
(21) Anmeldenummer: 15183287.0
(22) Anmeldetag: 01.09.2015
(51) Int. Cl.: H02K 3/12, H02K 3/28

(54) **MASCHINENKOMPONENTE FÜR EINE ELEKTRISCHE MASCHINE SOWIE EINE ELEKTRISCHE MASCHINE**

(30) Priorität: 28.10.2014 DE 102014221951
(71) Anmelder: ROBERT BOSCH GMBH, 70442 Stuttgart (DE)
(72) Erfinder: Knappenberger, Uwe, 75417 Muehlacker (DE); Kudlek, Alexander, 31199 Diekholzen (DE); Heuser, Patrick, 70372 Stuttgart (DE); Alexander, Marcus, 71640 Ludwigsburg (DE)

(57) **Zusammenfassung**

Die Erfindung betrifft eine Maschinenkomponente (2) für eine elektrische Maschine (1) mit einer als Steckwicklung ausgebildeten Wicklung, umfassend:
- einen Komponentenkörper (21, 22);
- Wicklungsleiter von Steckelementen (4), die in Nuten (23) der Maschinenkomponente (2) angeordnet sind,
wobei die Wicklungsleiter der Steckelemente (4) erste und zweite Wicklungsteile (41, 42) ausbilden, wobei die zweiten Wicklungsteile (42) in einer Polygonverschaltung verschaltet sind und die ersten Wicklungsteile (41) in einer mit der Polygonverschaltung kombinierten Sternschaltung verschaltet sind, so dass eine Stern-Polygon-Verschaltung der Wicklungsteile (41, 42) ausgebildet ist,
wobei die Wicklungsleiter der ersten Wicklungsteile (41) in mindestens einer ersten Lage (L1) und die Wicklungsleiter der zweiten Wicklungsteile (42) in mindestens einer zweiten Lage (L2) entlang der Anordnungsrichtung der Nuten (23) angeordnet sind, so dass die mindestens eine erste Lage (L1) und die mindestens eine zweite Lage (L2) gegeneinander versetzbar sind.

## Beschreibung

### Technisches Gebiet

Die Erfindung betrifft elektrische Maschinen mit einer gewickelten Maschinenkomponente, wie beispielsweise einem Stator oder einem Rotor, bei der eine Wicklung durch Steckelemente ausgebildet ist.

### Stand der Technik

Bei der Herstellung von Maschinenkomponenten mit elektrischen Maschinen wird für das Einbringen von Wicklungen versucht, einen möglichst hohen Füllfaktor zu erreichen. Der Füllfaktor entspricht dem Grad der Ausfüllung eines Querschnitts einer Nut durch die Summe der Querschnitte der darin befindlichen Wicklungsleiter. Ein hoher Füllfaktor ermöglicht niedrigere Verluste und damit einen hohen Wirkungsgrad der elektrischen Maschine und ein hohes Dauerdrehmoment vor allem im Grunddrehzahlbereich.

Eine Möglichkeit, einen hohen Füllfaktor zu erreichen, besteht darin, eine Steckwicklung aus einzelnen Steckelementen in die betreffende Maschinenkomponente einzubringen.

Die Anforderungen an elektrische Maschinen für Hybrid- und Elektrofahrzeuge variieren derzeit erheblich hinsichtlich des Bauraums, des Kurzzeit- und Dauerdrehmoments bzw. -leistung und dergleichen.

Aus der Druckschrift US 2005/0017592 A1 ist eine Wicklung für eine Maschinenkomponente für eine elektrische Maschine bekannt, die aus einer Kombination einer Dreiecksverschaltung und einer Sternschaltung zusammengesetzt ist. Jede Phasenwicklung umfasst mehrere Spuleneinheiten, deren Verbindung untereinander einfach änderbar ist, um die elektrische Maschine flexibel an Anforderungen anzupassen.

Aus der Druckschrift US 6,784,583 B2 ist eine elektrische Maschine mit einer Wicklung bekannt, bei der eine Kombination einer Dreiecksverschaltung mit einer Sternverschaltung gebildet wird.

Aus der Druckschrift EP 1 244 194 B1 ist weiterhin ein Herstellungsverfahren für eine elektrische Maschine bekannt, bei der Wicklungsteile in Sternschaltung und in Dreiecksschaltung verschaltet sind.

Es ist Aufgabe der vorliegenden Erfindung, eine hohe Flexibilität der Wicklungsauslegung bei einer Steckwicklung zu erreichen, die derzeit nur durch in Einziehtechnik ausgebildete Wicklungen für Maschinenkomponenten von elektrischen Maschinen erreicht werden kann.

### Offenbarung der Erfindung

Diese Aufgabe wird durch die Maschinenkomponente für eine elektrische Maschine nach Anspruch 1 sowie durch die elektrische Maschine gemäß dem nebengeordneten Anspruch gelöst.

Weitere Ausgestaltungen sind in den abhängigen Ansprüchen angegeben.

Gemäß einem ersten Aspekt ist eine Maschinenkomponente für eine elektrische Maschine mit einer als Steckwicklung ausgebildeten Wicklung vorgesehen, umfassend:
- einen Komponentenkörper;
- Wicklungsleiter von Steckelementen, die in Nuten der Maschinenkomponente angeordnet sind,
wobei die Wicklungsleiter der Steckelemente erste und zweite Wicklungsteile ausbilden, wobei die zweiten Wicklungsteile in einer Polygonverschaltung verschaltet sind und die ersten Wicklungsteile in einer mit der Polygonverschaltung kombinierten Sternschaltung verschaltet sind, so dass eine Stern-Polygon-Verschaltung der Wicklungsteile ausgebildet ist,
wobei die Wicklungsleiter der ersten Wicklungsteile in mindestens einer ersten Lage und die Wicklungsleiter der zweiten Wicklungsteile in mindestens einer zweiten Lage entlang der Anordnungsrichtung der Nuten angeordnet sind, so dass die mindestens eine erste Lage und die mindestens eine zweite Lage gegeneinander versetzbar sind.

Eine Idee der obigen Maschinenkomponente besteht darin, diese mit Hilfe einer Steckwicklung aufzubauen, so dass erste Wicklungsteile als Sternschaltung und zweite Wicklungsteile als Polygonschaltung, insbesondere in Dreieckschaltung, in kombinierter Weise verschaltet sind. Dadurch wird eine Stern-Polygon-Verschaltung bereitgestellt, die es je nach Aufteilung zwischen den als Polygon verschalteten zweiten Wicklungsteilen zu den in Sternschaltung verschaltenden ersten Wicklungsteilen ermöglicht, eine elektrische Maschine mit gewünschten elektrischen Eigenschaften auszubilden.

Weiterhin sind die ersten Wicklungsteile und die zweiten Wicklungsteile in Lagen entlang einer Anordnungsrichtung der Nuten vorgesehen, so dass insbesondere durch einen Versatz der ersten Wicklungsteile zu den zweiten Wicklungsteilen die äquivalente effektive Windungszahl (bezogen auf eine reine Sternschaltung) reduziert werden kann.

Die elektrischen Eigenschaften von elektrischen Maschinen mit Maschinenkomponenten, die eine als Steckwicklung vorgesehene Wicklung aufweisen, können im Allgemeinen aufgrund der geringen Anzahl von üblicherweise in einer Nut vorgesehenen Leitersträngen nicht in feinstufiger Weise angepasst werden. Mit anderen Worten ist eine flexible Anpassung der so aufgebauten elektrischen Maschine durch Anpassen der Anzahl von Wicklungsleitern in einer Nut, d.h. der Anzahl von Lagen, nur in ganzzahligen Schritten möglich.

Durch Vorsehen von ersten und zweiten Wicklungsteilen in Lagen und einem mechanischen Versatz der als Sternschaltung verschalteten ersten Wicklungsteile zu den als polygon verschalteten zweiten Wicklungsteilen ist es möglich, einen Ausnutzungsgrad der Maschinenkomponente feinstufig zu variieren. Der Ausnutzungsgrad entspricht einem Leistungsmaß, das sich auf eine Leistungsangabe einer elektrischen Maschine mit ausschließlich in Sternschaltung verschalteten Wicklungsteilen bezieht. Das Leistungsmaß kann beispielswesie einem Drehmoment oder einer Drehzahl bei einer Ansteurung mit einem bestimmten Motorstrom entsprechen.

Ein Versatz der ersten und zweiten Wicklungsteile bezüglich ihrer mechanischen Lage ermöglicht es somit, die Maschinenkomponente für die elektrische Maschine flexibler auszulegen, d.h. deren elektrische Eigenschaften ohne sonstige konstruktive Änderungen entsprechend den Anforderungen anzupassen, als dies durch eine bloße Erhöhung oder Reduzierung der Anzahl der Wicklungsleiter in den Nuten der Maschinenkomponente möglich wäre.

Weiterhin kann die mindestens eine erste Lage und die mindestens eine zweite Lage gegeneinander versetzt sein.

Gemäß einer Ausführungsform können die Steckelemente jeweils U-förmig mit einem Brückenabschnitt und zwei davon abstehenden Schenkelabschnitten ausgebildet sein, wobei die Brückenabschnitte an einer ersten Stirnseite des Komponentenkörpers und abstehende Enden der Schenkelabschnitte an einer zweiten Stirnseite des Komponentenkörpers angeordnet sind.

Es kann vorgesehen sein, dass die Anzahl der einander benachbarten Nuten, die mit der gleichen Phase zugeordneten ersten bzw. zweiten Wicklungsteilen versehen sind, zwei oder mehr als zwei beträgt.

Mehrere erste Lagen und/oder mehrere zweite Lagen können verschiedene Versatze zueinander aufweisen.

Weiterhin kann die Anzahl der ersten Lagen größer sein als die Anzahl der zweiten Lagen und der Versatz der ersten und zweiten Lagen zueinander zwischen 0 und q x m/2 liegen, wobei q der Lochzahl und m der Anzahl der Phasen entsprechen.

Gemäß einem weiteren Aspekt ist eine elektrische Maschine mit der obigen Maschinenkomponente vorgesehen.

Weiterhin kann die Maschinenkomponente als ein Stator ausgebildet sein.

### Kurzbeschreibung der Zeichnungen

Ausführungsformen werden nachfolgend anhand der beigefügten Zeichnungen näher erläutert. Es zeigen:
- Figur 1: eine schematische Querschnittsdarstellung durch eine elektrische Maschine mit einem bewickelten Stator;
- Figur 2: eine Darstellung einer Verschaltung der Wicklungsteile des Stators der elektrischen Maschine in der Figur 1 als ein elektrisches Ersatzschaltbild;
- Figur 3a und 3b: Phasenzuordnungen der Wicklungsteile zu den Nuten des Stators der elektrischen Maschine der Figur 1 ohne und mit einer Verschiebung um eine Nut der im Dreieck zu den im Stern verschaltenden Wicklungsteilen.

### Beschreibung von Ausführungsformen

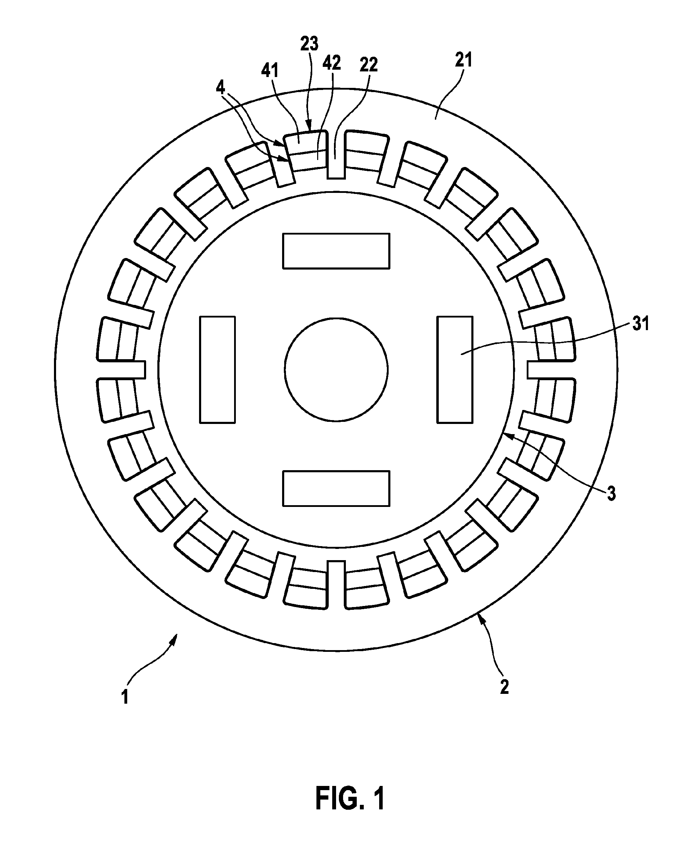

Figur 1 zeigt eine schematische Überschnittsdarstellung durch eine elektrische Maschine 1 mit einem Stator 2 und einem Rotor 3. Der Stator 2 als Maschinenkomponente ist im Wesentlichen zylinderförmig ausgebildet und weist von einem Statorjoch 21 nach innen abstehende Statorzähne 22 auf. Die abstehenden Enden der Statorzähne 22 definieren eine im Wesentlichen zylinderförmige Innenausnehmung zur Aufnahme des Rotors 3. Das Statorjoch 21 und die Statorzähne 22 bilden einen Statorkörper (Komponentenkörper), in dem eine Steckwicklung aufgenommen ist.

Die zwischen den Statorzähnen 22 gebildeten Statornuten 23 sind mit Steckwicklungen versehen, die im Wesentlichen durch bügelförmige Steckelemente 4 ausgebildet sind. Die Steckelemente 4 sind jeweils U-förmig mit einem Brückenabschnitt und zwei davon abstehenden Schenkelabschnitten ausgebildet.

Die Steckelemente 4 sind von einer ersten axialen Stirnseite des Stators 2 eingesteckt und werden an einer der ersten stirnseitigen gegenüberliegenden zweiten Stirnseite mit ihren freien Enden verschaltet oder über externe Anschlüsse kontaktiert. Die Brückenabschnitte sind dadurch an der ersten Stirnseite des Stators 2 und abstehende Enden der Schenkelabschnitte an der zweiten Stirnseite des Stators 2 angeordnet. Die Schenkelabschnitte der Steckelemente 4 sind im Querschnitt in den Statornuten 23 dargestellt.

Im vorliegenden Ausführungsbeispiel sind in den Statornuten 23 jeweils zwei Wicklungsleiter, die als Schenkel von zwei Steckelementen 4 ausgebildet sind, angeordnet. In alternativen Ausführungsformen können auch mehr als zwei Wicklungsleiter der Steckelemente 4 in den Statornuten 23 angeordnet sein.

Der Rotor 3 ist im Wesentlichen mit Permanentmagneten 31 versehen, um Rotorpole zum Bereitstellen eines Erregermagnetfelds auszubilden.

Die oben beschriebene elektrische Maschine 1 stellt eine Synchronmaschine dar. Alternativ kann der Rotor auch mit Kurzschlusswicklungen zum Ausbilden einer Asynchronmaschine ausgebildet sein. Alternativ kann die oben als Stator ausgebildete Maschinenkomponente auch einen Rotor darstellen, der mit Hilfe einer Steckwicklung mit einer zum Beispiel über einen Kommutator bestrombaren Wicklung versehen sein kann.

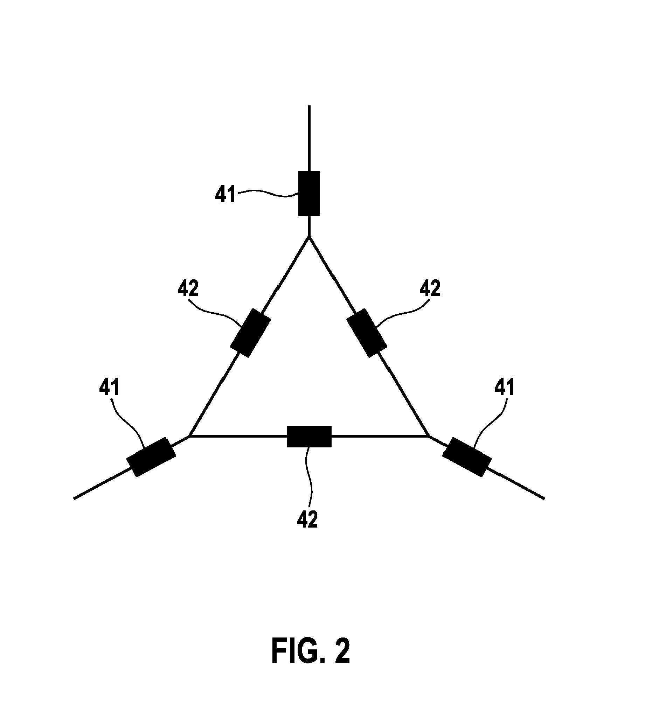

Wie in dem Ersatzschaltbild der Figur 2 gezeigt, können gemäß dem hier vorgeschlagenen Wicklungsschema bzw. Verschaltungsschema die durch die Steckelemente 4 gebildeten Wicklungsteile in einer Kombination einer Sternschaltung und einer Polygonverschaltung verschaltet werden. Insbesondere entspricht die dargestellte Verschaltung einer dreiphasigen elektrischen Maschine. Dabei werden zweite Wicklungsteile 42 der Statorwicklung als Polygon- bzw. Dreiecksschaltung und die Eckpunkte (Knoten) der Polygon- bzw. Dreiecksverschaltung über in Sternschaltung vorgesehene erste Wicklungsteile 41 angeschlossen, so dass die Polygonverschaltung in dem Sternpunkt der Sternverschaltung angeordnet ist. Die ersten und die zweiten Wicklungsteile 41, 42 sind in Figur 2 als Induktivitäten schematisch dargestellt.

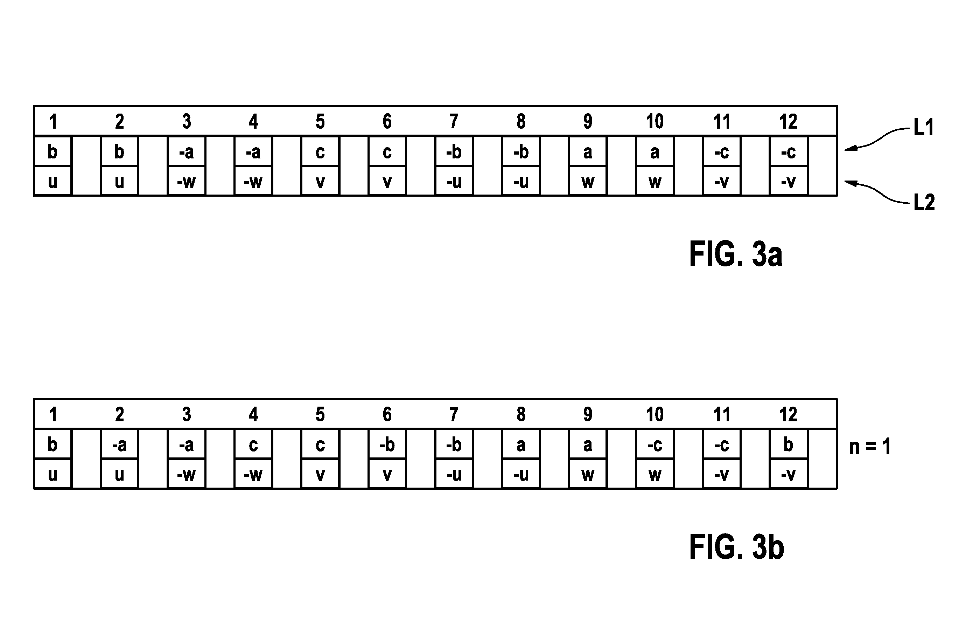

In einer Ausführungsform können die als Sternschaltung verschalteten ersten Wicklungsteile in einer ersten Lage in den Statornuten 23 angeordnet sein, während die in Dreiecksschaltung verschalteten zweiten Wicklungsteile 42 in einer zweiten Lage in den Statornuten 23 angeordnet werden. Eine solche Anordnung ist schematisch in der Figur 3a dargestellt. Man erkennt für einen Ausschnitt des Stators, der 360° elektrischer Motorlage entspricht, in einer abgerollten Darstellung benachbarte Statornuten 23 mit jeweils darin angeordneten zwei Leitersträngen.

Die erste Lage L1 nimmt die ersten Wicklungsteile 41u, 41v, 41w und die zweite Lage L2 die zweiten Wicklungsteile 42a, 42b, 42c auf. Dabei sind im gezeigten Ausführungsbeispiel jeweils zwei benachbarte Statornuten 23 mit einer Phase zugeordneten Wicklungsteilen 41, 42 versehen. Die Anzahl der einander benachbarten Statornuten 23, die mit der gleichen Phase zugeordneten Wicklungsteilen versehen sind, kann jedoch in anderen Ausführungsformen auch eins oder mehr als zwei betragen. In der in Figur 3a gezeigten Anordnung sind die ersten Wicklungsteile 41 und die zweiten Wicklungsteile 42 in einer versatzfreien Anordnung bezüglich deren elektrischen Rotorlagen angeordnet.

Eine Möglichkeit, die elektrische Maschine entsprechend vorgegebenen Anforderungen auszulegen, besteht in der Wahl der Anzahl von Wicklungsleitern pro Statornut 23. Da bei Steckwicklungen üblicherweise nur wenige Leiterstränge pro Statornut 23 vorgesehen sind, sind die Möglichkeiten bei vorgegebener Maschinentopologie (d.h. die Anzahl der Statornuten, die Anzahl der Polpaare des Rotors und dergleichen ist vorgegeben) begrenzt, so dass durch eine Anpassung der Anzahl der Leiterstränge pro Statornut nur relativ große Sprünge bei der Anpassung der elektrischen Eigenschaften der elektrischen Maschine erreicht werden können.

Um die Flexibilität bei der Auslegung von Maschinenkomponenten für elektrische Maschinen, die mit Hilfe einer Steckwicklung bewickelt sind, zu erhöhen, ist nun vorgesehen, eine Verschaltung der Steckelemente 4, die die Steckwicklung ausbilden, in einer Stern- und Polygonverschaltung zu kombinieren. Dabei sind in jeder der Statornuten 23 ein Wicklungsleiter, der einem ersten Wicklungsteil, und ein Wicklungsleiter, der einem zweiten Wicklungsteil zugeordnet ist, vorgesehen.

Durch die Verteilung der in Sternschaltung verschalteten ersten Wicklungsteile 41 und der in Dreiecksschaltung verschalteten zweiten Wicklungsteile 42 in verschiedenen Lagen L1, L2 in den Statornuten 23 und durch Verschaltung der Wicklungsteile, so dass die in Sternschaltung verschalteten ersten Wicklungsteile 41 und die in Dreiecksschaltung verschalteten zweiten Wicklungsteile 42 bezüglich ihrer versatzfreien Anordnung zueinander räumlich versetzt sind, kann durch die Höhe des Versatzes eine erhöhte Flexibilität bei der Auslegung der elektrischen Maschine erreicht werden. Dies ist schematisch in der Darstellung der Figur 3b gezeigt. Durch einen Versatz kann der Stator 2 als Maschinenkomponente 2 für die elektrische Maschine 1 für eine maximale Drehzahl bzw. ein maximales Drehmoment ausgelegt werden.

Darüber hinaus ist es möglich, auch erste Wicklungsteile in mehreren ersten Lagen L1 und zweite Wicklungsteile in mehreren zweiten Lagen L2 anzuordnen. Die einzelnen Lagen L1, L2 können dabei zueinander einen unterschiedlichen Versatz aufweisen, wobei durch die Wahl der Versatzmöglichkeiten die Flexibilität bei der Auslegung, insbesondere für eine niedrige Anzahl von Statornuten 23, weiter verbessert werden kann.

Die Flexibilität kann deutlich gesteigert werden, wenn die in Sternschaltung verschalteten ersten Wicklungsteile 41 mindestens genauso viele oder mehr Windungen aufweisen wie die im Dreieck geschalteten zweiten Wicklungsteile 42 und/oder der Versatz der Lagen zueinander zwischen 0 und q x m/2 liegt, wobei q der Lochzahl und m der Anzahl der Phasen entspricht. Die Lochzahl q entspricht der Anzahl der benachbarten Statornuten 23, die auf jeden Pol der elektrischen Maschine entfällt. Mit anderen Worten kann die Lochzahl der Anzahl der Statornuten 23 pro Polzahl und Phasenzahl entsprechen.

Beispielsweise ist in Figur 3b die Verteilung der Wicklungsleiter, die den ersten und zweiten Wicklungsteilen 41 a, 41 b, 41 c, 42u, 42v, 42w zugeordnet sind, in die Statornuten 23 bei einem Versatz von eins, d.h. einer Statornut 23, dargestellt. Dabei werden die in Dreiecksschaltung verschalteten zweiten Wicklungsteile 42 zu den in Sternschaltung verschalteten ersten Wicklungsteilen 41 verschoben. Die nachfolgende Tabelle gibt für verschiedene Versatze Ausnutzungsgrade an, die die Leistungsfähigkeit einer dreiphasigen elektrischen Maschine 1 mit Lochzahl q = 2 und einer Aufteilung der Anzahl der ersten und zweiten Wicklungsteile 41, 42 von 1:1 bezüglich einer elektrischen Maschine 1 mit rein in Sternschaltung verschalteten Wicklungsteilen darstellt. Die Leistungsfähigkeit kann beispielsweise anhand einer Leistungsgröße wie z.B. einer Drehzahl oder einem Drehmoment bei definierten Ansteuerbedingungen, insbesondere bei festgelegtem Motorstrom, bestimmt sein.

| Verschiebung | Ausnutzungsgrad [%] |
|---|---|
| Reine Sternschaltung | 100.0% |
| n = -6 | 28.9% |
| n = -5 | 28.9% |
| n = -4 | 43.5% |
| n = -3 | 57.7% |
| n = -2 | 69.1% |
| n = -1 | 76.4% |
| n = 0 | 78.9% |
| n = +1 | 76.4% |
| n = +2 | 69.1% |
| n = +3 | 57.7% |
| n = +4 | 43.5% |
| n = +5 | 28.9% |
| n = +6 | 21.1% |

Durch eine Erhöhung der Anzahl der Wicklungsleiter der ersten Wicklungsteile 41 pro Statornut, insbesondere durch eine Erhöhung der Anzahl der ersten Lagen L1, können die Ausnutzungsgrade erhöht werden, so dass eine feinere Abstufung abhängig von der Anzahl der Versatzschritte erreicht werden kann, wie durch nachfolgende Tabelle gezeigt ist:

| Versatz | Ausnutzungsgrad [%] |
|---|---|
| Reine Sternschaltung | 100.0 |
| -9 | 62,9 |
| -8 | 66,6 |
| -7 | 71,4 |
| -6 | 76,4 |
| -5 | 81,1 |
| -4 | 85,0 |
| -3 | 87,7 |
| -2 | 89,3 |
| -1 | 89,3 |
| 0 | 87,7 |
| +1 | 85,0 |
| +2 | 81,1 |
| +3 | 76,4 |
| +4 | 71,4 |
| +5 | 66,6 |
| +6 | 62,9 |
| +7 | 60,8 |
| +8 | 60,8 |
| +9 | 62,9 |

Man erkennt, dass bei Vorsehen einer Statorwicklung mit vier Leitersträngen in jeder Statornut 23, von denen jeweils drei erste Wicklungsteile 41 ausbilden und nur jeweils einer der Wicklungsleiter einen zweiten Wicklungsteil 42 ausbildet, wesentlich bessere und feiner abgestuftere Ausnutzungsgrade je Versatzstufe der Statornuten 23 erreicht werden können. Dadurch ist eine Auslegung einer mit einer Steckwicklung ausgebildeten Maschinenkomponente 2 für eine elektrische Maschine einfacher möglich.

## Patentansprüche

1. Maschinenkomponente (2) für eine elektrische Maschine (1) mit einer als Steckwicklung ausgebildeten Wicklung, umfassend:
- einen Komponentenkörper (21, 22);
- Wicklungsleiter von Steckelementen (4), die in Nuten (23) der Maschinenkomponente (2) angeordnet sind,
wobei die Wicklungsleiter der Steckelemente (4) erste und zweite Wicklungsteile (41, 42) ausbilden, wobei die zweiten Wicklungsteile (42) in einer Polygonverschaltung verschaltet sind und die ersten Wicklungsteile (41) in einer mit der Polygonverschaltung kombinierten Sternschaltung verschaltet sind, so dass eine Stern-Polygon-Verschaltung der Wicklungsteile (41, 42) ausgebildet ist,
wobei die Wicklungsleiter der ersten Wicklungsteile (41) in mindestens einer ersten Lage (L1) und die Wicklungsleiter der zweiten Wicklungsteile (42) in mindestens einer zweiten Lage (L2) entlang der Anordnungsrichtung der Nuten (23) angeordnet sind, so dass die mindestens eine erste Lage (L1) und die mindestens eine zweite Lage (L2) gegeneinander versetzbar sind.

2. Maschinenkomponente (2) nach Anspruch 1, wobei die mindestens eine erste Lage (L1) und die mindestens eine zweite Lage (L2) gegeneinander versetzt sind.

3. Maschinenkomponente (2) nach Anspruch 1 oder 2, wobei die Steckelemente (4) jeweils U-förmig mit einem Brückenabschnitt und zwei davon abstehenden Schenkelabschnitten ausgebildet sind, wobei die Brückenabschnitte an einer ersten Stirnseite des Komponentenkörpers (21, 22) und abstehende Enden der Schenkelabschnitte an einer zweiten Stirnseite des Komponentenkörpers (21, 22) angeordnet sind.

4. Maschinenkomponente nach einem der Ansprüche 1 bis 3, wobei die Anzahl der einander benachbarten Nuten (23), die mit, der gleichen Phase zugeordneten, ersten bzw. zweiten Wicklungsteilen (41, 42) versehen sind, zwei oder mehr als zwei beträgt.

5. Maschinenkomponente (2) nach einem der Ansprüche 1 bis 4, wobei mehrere erste Lagen (L1) und/oder mehrere zweite Lagen (L2) verschiedene Versatze zueinander aufweisen.

6. Maschinenkomponente (2) nach einem der Ansprüche 1 bis 5, wobei die Anzahl der ersten Lagen (L1) größer ist als die Anzahl der zweiten Lagen (L2).

7. Maschinenkomponente (2) nach einem der Ansprüche 1 bis 6, wobei der Versatz der mindestens einen ersten und der mindestens einen zweiten Lage (L1, L2) zueinander zwischen 0 und q x m/2 liegt, wobei q der Lochzahl und m der Anzahl der Phasen entspricht.

8. Elektrische Maschine (1) mit einer Maschinenkomponente (2) nach einem der Ansprüche 1 bis 7.

9. Elektrische Maschine (1) nach Anspruch 8, wobei die Maschinenkomponente (2) als ein Stator ausgebildet ist.
